# EUROPEAN PATENT APPLICATION

(11) **EP 3 135 723 A1**
(43) Date of publication of application: **01.03.2017**
(21) Application number: 15182964.5
(22) Date of filing: 28.08.2015
(51) Int. Cl.: C08K 9/02, C08K 3/16, C08L 77/00

(54) **THERMOPLASTIC COMPOSITION CONTAINING ZINC SULPHIDE COATED WITH SILICIUM OXIDE**

(71) Applicant: DSM IP Assets B.V., 6411 TE Heerlen (NL)
(72) Inventor: VEGTE, VAN DER, Eric Willem, 6100 AA ECHT (NL); GELISSEN, Franciscus Wilhelmus Maria, 6100 AA ECHT (NL); DUIJNHOVEN, VAN, Franciscus Gerardus Henricus, 6100 AA ECHT (NL); LIGTHART, Godefridus Bernardus Wilhelmus Leonardus, 6100 AA ECHT (NL); WESSELS, Esther, 6100 AA ECHT (NL)
(74) Representative: Derix, Nocky Marienna

(57) **Abstract**

The invention relates to a thermoplastic polymer composition comprising a thermoplastic polymer, glass fibers and coated zinc sulphide wherein the coated zinc sulphide contains a SiO₂ coating, as well as parts thereof.

## Description

This invention relates to a thermoplastic polymer composition containing coated zinc sulphide, as well as articles made from this composition. These compositions are known and are for example described in US2010160514A1. Zinc sulphide (ZnS) is a pigment which is used to color thermoplastic polymer composition in a pure white shade and/or is often used in combinations with other colorants like inorganic pigments and dyes and/or organic pigments and dyes for shading (brightening) of colors or for covering shades. For example in automotive outdoor applications, ZnS is used to create different shades of black colors in combination with carbon black and other organic or inorganic colorants. However, due to the poor weather resistance of ZnS, these compositions exhibit discoloration while being exposed to UV light, which makes them less suitable for applications which are subjected to daylight. After prolonged exposure to UV light, the parts become greyish and/or loose mechanical properties, which is less attractive for the customer and gives a potential threat of failure due to mechanical non-performance. One of the solutions is to use titanium oxide (TiO₂) as pigment, as this provides good resistance against UV when specific coated types are used which prevent photochemical induced reactions at the particle surface. An disadvantage of titanium oxide, however, is that negatively affecst the mechanical and impact properties such as charpy notched, charpy unnotched and tensile strength in glass fiber reinforced plastic compositions, which makes titanium oxide less suitable for applications in which also mechanical properties are required.

It is thus an object of the present invention to provide a thermoplastic polymer composition which combines sufficient mechanical properties with sufficient UV stability.

This object has been achieved by a thermoplastic polymer composition comprising a thermoplastic polymer, glass fibers and coated zinc sulphide wherein the coated zinc sulphide contains a SiO₂ coating. Surprisingly, this composition exhibits mechanical and impact properties similar to glass fiber reinforced polymer compositions not comprising a whitening pigment, such as titanium oxide or zinc sulphide, while the UV properties after prolonged exposure to UV also remain sufficient. The thermoplastic polymer composition according to the invention allows applications where the application is subjected to daylight while also necessitating mechanical performance.

### Thermoplastic polymer

The thermoplastic polymer in the thermoplastic polymer composition can be chosen from a wide group of polymers known to a person skilled in the art and including polyesters, polyolefins, polyamides, polyvinyl chloride (PVC), acrylonitrile-butadiene-styrene terpolymer (ABS), polymethyl methacrylate (PMMA), polycarbonate (PC), polyoxymethylene (POM), polyurethane (PUR), Poly(p-phenylene sulphide) (PPS), as well as thermoplastic elastomers (TPE) based on polyamide (TPA), based on copolyesters (TPC), based on olefins (TPO), based on styrene (TPS), based on polyurethane (TPU) or based on crosslinked rubber (TPV) and depends on the required properties of the application.

Polyesters are known to a person skilled in the art and include for example polybutylene terephthalate (PBT), polyethylene terephthalate (PET), as well as polycyclohexylene terephthalate.

Polyolefins are also known to a person skilled in the art and include for example polypropylene, polyethylene as well as copolymers thereof.

Polyamides are also known to a person skilled in the art and include both aliphatic as well as partially or fully aromatic polyamides as well as copolyamides and blends of polyamides and/or copolyamides. These may be for example PA-6, PA-66, PA-610, PA-612, PA-11, PA-12, PA-410, PA-510, PA-46, PA-6I6T, including copolyamides which may contain other monomeric units, such as for example is terephthalic acid (T), isophthalic acid (I), isophoronediamine (IPD), as well as blends thereof; specific examples are PA-6/66, PA-66/6. Preferably, the polyamide is PA-6, PA-66, PA-46, PA-410, PA-6I6T, as well as blends thereof, even more preferably PA-6, PA-66 as well as copolyamides and blends thereof, as these polyamides are readily available.

Semi-aromatic polyamide is understood to be a polyamide with repeating units derived from aminoacids and/or dicarboxylic acids and diamines wherein either a dicarboxylic acid, or a diamine, or both, comprises repeating units derived from aromatic components such as terephthalic acid and isophthalic acid, ortho, meta or para xylylene diamine, while the remainder comprises repeating units derived from non-aromatic aminoacids and/or dicarboxylic acids and diamines, which can linear, branched, or cyclic, and/or arylaliphatic aminoacids, dicarboxylic acids and diamines. Specific examples include for example PA-6/6T, PA-66/6T, PA-6/IPDT, PA-7T, PA-9T, PA-10T and PA-12T as well as copolyamides of PA-4T, PA-5T, PA-6T and/or PA-8T, with for example PA-7T, PA-9T, PA-10T, PA-11T, PA-12T, PA-6, PA-66, and/or PA-MXD6 ; as well as blends thereof.

Preferably, the thermoplastic polymer is a polyamide, as it has been shown that the composition according to the invention is particularly suitable for polyamides, as polyamides are known to exhibit water uptake, more preferably the polyamide is an aliphatic polyamide. The composition according to the invention wherein the thermoplastic polymer is a polyamide, exhibits sufficient mechanical and UV properties.

### Zinc sulphide

The thermoplastic polymer composition according to the invention comprises coated zinc sulphide wherein the coated zinc sulphide contains a silicium oxide (SiO₂) coating.

With coating herein is understood a covering present to the surface of an object; the covering may be all-over, thus completely covering the surface or partially, preferably the covering is completely, as this protects the zinc sulphide from the other ingredients present in the composition according to the invention. The object herein contains zinc sulphide. The coating of the coated zinc sulphide contains at least one layer, wherein the at least one layer contains a SiO₂ coating, which thus includes zinc sulphide coated with SiO₂ coating only; as well as zinc sulphide treated with another material, and subsequently coated with SiO₂ coating; as well as zinc sulphide coated with SiO₂ coating and subsequently treated with another material.

The inventors have found that coated zinc sulphide containing a SiO₂ coating in a thermoplastic polymer composition combines sufficient UV properties with sufficient mechanical properties. The coated zinc sulphide usually has a particle size d50 of between 0.001 and 100 micron, preferably between 0.005 and 50 micron and more preferred between 0.01 and 10 micron, even more preferred between 2 and 10 micron. Particle size can be determined by laser diffraction such as Marlvern Mastersizer 2000.

The percentage of SiO₂ in the coating versus zinc sulphide is preferably between 2 and 40 wt%, wherein the weight % is with respect to the total weight of the coated zinc sulphide, more preferably between 4 and 30 wt%, and even more preferred between 5 and 25 wt%. It has been observed that a higher percentage of SiO₂ results in better UV performance.

The coated zinc sulphide may be obtained by a wet chemical process, such as the following:
The zinc sulphide, optionally treated with another material, is for example suspended in water during the wet coating process and provided with a hydrolysis suitable pH-value in a soluble glass solution. This pH-value is adjusted in a way that the SiO₂ is precipitated directly on the pigments without any side precipitation. The pH-value is typically kept constant by simultaneous dosing of a base and/or an acid. Subsequently, the treated pigments are separated, washed and dried at 50 °C-150 °C, preferably at 80 °C - 120 °C for 6 h -18 h and consecutively glowed for 0.25 h-2 h. Normally, the glowing temperatures are in a range of 200 °C - 600 °C, preferably between 300 °C and 550 °C. In a next step the glowed pigment can additionally be sieved. The precipitation of the SiO₂ on the zinc sulphide pigments is generally carried out by the addition of a potassium or a sodium silicate solution, preferably a sodium silicate solution with a suitable pH-value.

The amount of coated zinc sulphide depends on the desired colour formulation and generally lies between 0.01 and 20 wt% with respect to the total weight of thermoplastic polymer composition, preferably between 0.05 and 10 wt%, and more preferably between 0.1 and 2 wt%.

### Glass fibers

The thermoplastic polymer composition according to the invention contains glass fibers. Glass fibers as such are known to a person skilled in the art. Preferably, the composition comprises glass fibers between 5 and 60 wt% with respect to the total weight of thermoplastic polymer composition, more preferably between 10 and 50 wt% and even more preferred between 20 and 50 wt%.

### Other additives

The thermoplastic polymer composition may comprise further additives such as other organic and inorganic colorants, such as carbon black, nigrosine. It also may contain mold release agents, lubricants, fillers, stabilizers.

Stabilizers include those known to a person skilled in the art and include heat and/or UV stabilizers such as HALS and HAS stabilizers, as well as inorganic stabilizers.

Preferably the composition contains heat stabilizer, such as copper compounds, preferably a copper compound in combination with a salt containing a halogenide acid group, for example an iodide or a bromide salt. Good examples of suitable copper compounds include copper (I) halogenides, preferably copper iodide (CuI) and further copper salts like for instance copper acetate, copper sulfate and cupper stearate. As the salt containing an halogenide acid group preferably potassium bromide (KBr) of potassium iodide (KI) are used. Most preferably a combination of copper iodide and potassium iodide (CuI/KI) is used. Suitable amounts of heat stabilizers include amounts between 0.1 and 0.5 wt% with respect to the total weight of thermoplastic polymer composition. Even more preferred, the thermoplastic polymer is a polyamide in combination with a heat stabilizer containing a copper compound in combination with a salt containing a halogenide acid group. This results in better heat stability.

The composition may contain other fillers besides glass fibers, such as inorganic and organic fillers and are generally known to a person skilled in the art. These include for example glass beads, milled glass, talc, mica, wollastonite, calcinated clay. Suitable amounts may include for example 5 to 60 wt%, preferably 10 to 40 wt%, with respect to the total weight of polymer composition.

The thermoplastic polymer composition according to the invention can suitably be used for applications which are exposed to daylight, either directly in contact or via glass or other media that transmits UV light. Examples are automotive applications including exterior parts, E&E applications, outdoor power equipment, sports and leisure applications.

### Examples:

Preparation of coated zinc sulphide was performed using the wet chemical process for EM144383 and EM144384. Moreover, an organically coated zinc sulphide was employed, as well as a non-coated zinc sulphide. Properties are shown in Table 1.

**Table 1; properties of used pigments containing ZnS**

| | wt% SiO₂ | d50 | d10 | d90 |
|---|---|---|---|---|
| Reference name: | | | | |
| EM144383 | 9 | 3.119 micron | 1.469 micron | 6.350 micron |
| EM144384 | 12 | 6.169 micron | 3.498 micron | 10.575 micron |
| Lapilith AS | 0* | 3.240 micron | 1.342 micron | 23.302 micron |
| Sachtolith HDS | 0** | 210 nm | not measured | not measured |

| | | | | |
|---|---|---|---|---|
| * contains organic coating; ** does not contain a coating | | | | |

Compositions were prepared on a twin screw extruder with various pigments in order to colour match to 9B9, a standard colour coding for Volkswagen. All compositions contained 30 wt% glass fibers, 0.5 wt% carbon black, 0.24 wt% CuI/KI heat stabilizer and 0.3 wt% Acrawax release agent.

**Table 2; Amounts of pigments and polymers of various compositions**

| Example no | polymer 1 [wt%] | polymer 2 [wt%] | white pigment [wt%] | other pigments [wt%] | other ingredients [wt%] |
|---|---|---|---|---|---|
| Ex 1 | PA-6 | - | EM144383 | - | |
| | 67.46 | | 1.5 | | |
| Ex 2 | PA-6 | - | EM144384 | - | |
| | 67.16 | | 1.8 | | |
| Ex 3 | PA-6 | PA-61/6T 10 | EM144383 | - | Chimassorb 944 (HALS stabilizer) 0.2 |
| | 57.26 | | 1.5 | | |
| Ex 4 | PA-6 | - | EM144383 | - | Chimassorb 944 (HALS stabilizer) 0.2 |
| | 67.26 | | 1.5 | | |
| Comp Ex A | PA-6 | | Sachtolith | Bayplast Yellow 0.22 | |
| | 67.24 | | HDS 1.5 | | |
| Comp Ex B | PA-6 | | Lapilith AS | Bayplast Yellow 0.24 | |
| | 67.22 | | 1.5 | | |
| Comp Ex C | PA-6 | | TiO₂ coated | Bayplast Yellow 0.2 Macrolex Orange 0.1 | |
| | 67.95 | | R105 0.71 | | |

The compositions were injection molded into test specimens, both bars and plates, and the following properties were determined:
Modulus: determined at 23°C and 5 mm/min, according to ISO 527
Tensile strength: determined at 23°C and 5 mm/min, according to ISO 527
Elongation at break: determined at 23°C and 5 mm/min, according to ISO 527
Charpy N (notched) determined at 23°C according to ISO 179/1eA
Charpy UN (unnotched) determined at 23°C according to ISO 179/1eU

UV stability was measured with test standard VW PV 3930 on plates via accelerated as described below:

### Test protocol

| | |
|---|---|
| Accelerated test equipment: | Atlas Weather-Ometer Ci4000 |
| Test standard : | VW PV 3930 |
| Specifications of testconditions : | Weathering in Moist, Hot Climate |
| - Light source : | Xenon arc |
| - Filtering : | Borosilicate S inner and outer |
| - Radiation intensity (regulated) : | 0,50 W/m²/nm at 340 nm |
| - Black standard temperature : | 65 +/- 2 °C |
| - Chamber air temperature : | 40 +/- 3 °C |
| - Dry/wet cycle : | 102' dry/ 18' water spray |
| - Relative humidity : | 70+/-10% |
| - Light/dark cycle : | Continuous illumination |

The results of the measurements are shown in table 3.

**Table 3; Mechanical and UV stability properties**

| Example no | polymer | white pigment | Mechanical properties | | | | | UV stability; accelerated weathering acc. to PV3930 |
|---|---|---|---|---|---|---|---|---|
| | | | Tensile Modulus (MPa) | Tensile Strength (MPa) | e.a.b. (%) | Notched Charpy (kJ/m2) | Unnotched Charpy (kJ/m2) | Grey scale after 750 hrs |
| | | | | | | | | |
| Ex 1 | PA-6 | EM144383 | 9643 | 171 | 3.1 | 7.5 | 51 | 3 |
| Ex 2 | PA-6 | EM144384 | 9671 | 172 | 3.1 | 7.5 | 50 | 4 |
| Ex 3 | PA-6/PA-6I6T | EM144383 | 9600 | 170 | 3.0 | 9.5 | 65 | 4 |
| Ex 4 | PA-6 | EM144383 | 10100 | 179 | 3.3 | 10.5 | 69 | 4 |
| Comp Ex A | PA-6 | Sachtolith HDS | 9769 | 168 | 2.8 | 7.4 | 48 | 2 |
| Comp Ex B | PA-6 | Lapilith AS | 9894 | 173 | 2.9 | 7.7 | 50 | 2 |
| Comp Ex C | PA-6 | TiO₂ (R105) | 9537 | 150 | 2.2 | 4.0 | 34 | 3 |

The results in table 3 clearly show that the compositions according to the invention exhibit good mechanical properties, comparable with Comparative example A. Comparative example C clearly shows significantly lower mechanical properties. Surprisingly, the compositions according to the invention exhibit a UV stability expressed in grey scales of 3 and 4, whereas the comparative examples either show significantly lower mechanical properties or exhibit a grey scale of 2, which is significant worse compared to 3 or 4.

## Claims

1. Thermoplastic polymer composition comprising a thermoplastic polymer, glass fibers and coated zinc sulphide wherein the coated zinc sulphide contains a SiO₂ coating.

2. Thermoplastic polymer composition according to claim 1, wherein the amount of coated zinc sulphide is between 0.01 and 20 wt% with respect to the total weight of thermoplastic polymer composition.

3. Thermoplastic polymer composition according to claim 1 or 2, wherein the thermoplastic polymer is chosen from the group of polyamides, polyesters and polyolefins.

4. Thermoplastic polymer composition according to any of the preceding claims, wherein the thermoplastic polymer is a polyamide, chosen from the group consisting of PA-6, PA-66, PA-610, PA612, PA11, PA12, PA-410, PA-510, PA-46, PA-6/66, PA-66/6, PA-6/6T, PA-66/6T, PA-6/IPDT, PA7T, PA9T, PA10T, PA-6I6T and PA12T as well as copolymers and blends thereof.

5. Thermoplastic polymer composition according to any of the preceding claims, wherein the thermoplastic polymer is a polyamide, chosen from the group consisting of PA-6, PA-66, PA-46, PA-410, PA-6I6T, as well as blends thereof.

6. Thermoplastic polymer composition according to any of the preceding claims, wherein the amount of glass fibers is between 10 and 50 wt%, wherein the weight percentage is with respect to the total weight of thermoplastic polymer composition.

7. Thermoplastic polymer composition according to any of the preceding claims, wherein the coated zinc sulphide has a particle diameter (d50) of between 0.001 and 100 micron.

8. Thermoplastic polymer composition according to any of the preceding claims, wherein the percentage of SiO₂ in the coating versus zinc sulphide is between 2 and 40 wt%, wherein the weight percentage is with respect to the total weight of the coated zinc sulphide.

9. Thermoplastic polymer composition according to any of the preceding claims, wherein the thermoplastic polymer is a polyamide and wherein the composition further comprises a stabilizer in an amount of between 0.1 and 0.5 wt% with respect to the total weight of the thermoplastic polymer composition.

10. Thermoplastic polymer composition according to claim 9, wherein the stabilizer is a copper compound.

11. Thermoplastic polymer composition according to any of the preceding claims, wherein the composition further comprises colorants, chosen from the group of carbon black and nigrosine and combinations thereof.

12. Part, comprising a thermoplastic polymer composition according to any of the preceding claims.

13. Use of thermoplastic polymer composition according to any of the claims 1 to 11, in outdoor power equipment or automotive exterior part.
